# EUROPEAN PATENT SPECIFICATION

(11) **EP 2 553 174 B1**
(45) Date of publication and mention of the grant of the patent: **01.03.2017**
(21) Application number: 10714605.2
(22) Date of filing: 02.04.2010
(51) Int. Cl.: E02B 17/00, F03D 1/00, H02B 5/00

(54) **OFF-SHORE TRANSFORMER STATION WITH EXCHANGEABLE TRANSFORMER ASSEMBLY**
OFFSHORE-TRANSFORMATORSTATION MIT AUSTAUSCHBARER TRANSFORMATORANORDNUNG
STATION DE TRANSFORMATEURS EN MER À ENSEMBLE TRANSFORMATEUR POUVANT ÊTRE CHANGÉ

(43) Date of publication of application: 06.02.2013
(73) Proprietor: General Electric Technology GmbH, 5400 Baden (CH)
(72) Inventor: MILLER, Jeffrey, Stafford Staffordshire ST17 4QD (GB)
(74) Representative: Ilgart, Jean-Christophe
(86) International application number: PCT/EP2010/054465
(87) International publication number: WO 2011/120591

(56) References cited:
- EP-A1- 2 159 420
- EP-A2- 1 101 934
- WO-A1-2007/096008
- WO-A2-01/46583

## Description

This invention relates to a substation platform for use in offshore power transmission and a method of replacing a transformer on such a substation platform.

In power transmission networks electrical power typically undergoes an increase in voltage to decrease its current level before being transmitted over long distances. The transmission of electrical power using low current minimises losses associated with resistive heating in the transmission lines or cables, and thereby improves the cost-effectiveness of power transmission over such lines and/or cables. The increase in voltage is carried out using an electrical substation which includes a transformer with a voltage step-up capability.

To maximise the cost-effectiveness of long-distance power transmission, electrical substations are usually located as close as possible to power-producing facilities. When such a power-producing facility, such as an offshore wind farm, is located at sea, an electrical substation is typically located on a nearby offshore platform near the power-producing facility. Any electrical power generated by the power-producing facility can then be stepped up to a higher voltage level via a transformer of the substation before being transmitted over long distances.

In the event of damage to the transformer, a replacement transformer is transported via a transport barge to the substation platform. Conventionally the defective and replacement transformers are transferred between the transport barge and the substation platform using a barge including a jack-up crane. The jack-up crane is employed to lift the defective transformer from the offshore platform and transfer the defective transformer to the barge for subsequent transport to land. The jack-up crane is also employed to lift the replacement transformer from the barge to a designated location on the substation platform.

Such barges with a jack-up crane however are usually not available at short notice. The lack of availability of barges with jack-up cranes results in a long lead time in replacing the defective transformer, and therefore a substantial offline period of the electrical substation. This not only leads to lost revenue for the power-producing facility operator, but also results in inconvenience for those relying on supply of electrical power from the power-producing facility.

Document EP 2 159 420 A1 discloses a method and means for replacing equipment such as a transformer in a wind turbine nacelle, by passing the equipment through an opening in a lower frame of the nacelle.

Document WO 01/46583 A2 discloses an offshore wind power installation, in which equipment like switchgear or transformers is housed in replaceable containers which are arranged on the sides of a tower of a wind turbine.

Document EP 1 101 934 A2 discloses a wind turbine comprising a nacelle with an opening in its floor and a crane associated to a winch on the ground for lifting up and down equipment through said opening.

Document WO 2007/096008 A1 discloses a wind turbine nacelle comprising a lower opening in its frame, a first permanent, hoisting means or power hoist which can be aligned with said opening for hoisting light loads, a second hoisting means or power hoist removably mounted to the rear of the nacelle, and a winch which can also be aligned with said opening for hoisting heavy loads.

According to a first aspect of the invention, there is provided a substation platform for use in offshore power transmission comprising a primary floor including at least one opening; at least one transformer assembly including one or more transformers for connection in use to one or more electrical networks, the or each transformer assembly being releasably connected to the primary floor, and at least one strand jack including one or more cables, the or each cable being operable to releasably connect to a respective transformer assembly and the or each strand jack being operable to lower or lift the respective transformer through the respective opening in the primary floor. Moreover, the or each transformer assembly includes a secondary floor attached to the base of the respective transformer and releasably connected to the primary floor.

The provision of at least one strand jack in the substation platform removes the need for jack-up cranes when replacing a defective transformer. Strand jacks can be used to lift heavy equipment while occupying a relatively small footprint. It is therefore possible to install multiple strand jacks on a substation platform without significant increase in size and weight of the platform. The constant availability of strand jacks results in a relatively short lead time in replacing defective transformers on substation platforms.

The secondary floor provides additional support to the transformer assembly. In addition, the inclusion of a secondary floor results in a modular arrangement in which the secondary floor having a standard size is used to support a range of transformers having different footprint sizes.

Transferring transformers between platform and barge through an opening in the primary floor leads to improved safety for workers on the substation platform because it eliminates the risk of a transformer falling onto the platform while being lifted in the air.

Preferably the or each opening in the primary floor is located underneath the transformer assembly.

The provision of an opening underneath the transformer assembly results in time savings and convenience for the platform workers because there is no need to move the heavy transformer to another location on the platform before being lowered onto an incoming barge. In addition, the risk of accidents arising from the transport of heavy transformers around the platform is eliminated.

The or each transformer assembly preferably closes the respective opening of the primary floor when the or each transformer assembly is attached to the primary floor.

Using the transformer assembly to close the opening in the primary floor decreases the risk of workers falling through uncovered openings in the platform.

In embodiments of the invention the or each strand jack may be located above the respective transformer assembly.

Such an arrangement allows for fast attachment of the or each strand jack to the transformer assembly and thereby reduces lead time associated with replacing the transformer. Otherwise it would be necessary to move the or each strand jack from elsewhere on the substation platform to the desired position to enable replacement of the transformer.

Additionally the or each strand jack positioned above the transformer assembly may be attached to the transformer assembly at all times during normal operation of the substation platform to provide the transformer assembly with additional support and prevent the possibility of the transformer assembly falling through the opening in the primary floor into the sea. In addition, constant attachment of the or each strand jack to the transformer assembly reduces lead time in replacing defective transformers by removing the step of attaching the or each strand jack to the transformer assembly.

In further embodiments the or each secondary floor closes the respective opening in the primary floor when the or each secondary floor is connected to the primary floor.

Closing the opening in the primary floor with the secondary floor of the transformer assembly reduces the risk of people or equipment falling through the primary floor into the sea. In addition, it is more straightforward to fasten the secondary floor to the primary floor when the footprints of the secondary floor and the opening are closely matched.

In embodiments of the invention the primary floor and/or the or each secondary floor may include a grill structure.

The use of a grill structure reduces the weight of the or each floor, which renders the or each floor easier to transport. It also leads to a reduction in material, which leads to increased cost savings without affecting the strength of the floor.

In other embodiments the or each secondary floor may be releasably connected to the primary floor via one or more bolted connections.

The inclusion of one or more bolt connections allows for quick attachment and/or detachment of the secondary floor during the transfer of the transformer assembly between platform and barge.

In further embodiments, the or each transformer assembly may include a spreader beam for connection in use to the or each cable of the respective strand jack. In such embodiments employing the use of a spreader beam, the or each spreader beam may be operable to releasably connect to a respective secondary floor using a plurality of chains or slings.

The use of a spreader beam to interconnect strand jacks and the transformer assembly helps to maintain the positions of lifting equipment, such as chains and slings, relative to the transformer assembly during lifting or lowering of the transformer assembly. This prevents contact between such lifting equipment and the transformer, and thereby prevents accidental damage to the transformer.

Preferably at least one floor may include a bunded tank. The bunded tank acts to secure against transformer leaks and/or as a catchment for fire suppression fluids.

According to a second aspect of the invention, there is provided a method of replacing a transformer on a substation platform of any of the preceding claims comprising the steps of detaching a first transformer assembly from a primary floor; operating the or each strand jack to lower the first transformer assembly through an opening in the primary floor; placing the first transformer assembly onto a boat; and detaching the or each cable of the respective strand jack from the first transformer assembly.

In such embodiments the method may further include the step of the connecting one or more cables of at least one strand jack to the first transformer assembly before the step of detaching the first transformer assembly from the primary floor.

In embodiments of the invention the method may further include positioning a boat carrying a second transformer assembly so that the second transformer assembly is beneath the opening in the primary floor; connecting one or more cables of at least one strand jack to the second transformer assembly; operating the or each strand jack to lift the second transformer assembly through the opening in the primary floor; and attaching the second transformer assembly to the primary floor.

In such embodiments the method may further include the step of detaching the or each cable of the respective strand jack from the second transformer assembly after the step of attaching the second transformer assembly to the primary floor.

The first transformer assembly may be detached from the first primary floor by detaching a secondary floor of the first transformer assembly from the primary floor. Preferably this is performed by releasing the one or more bolted connections.

The second transformer assembly may be attached to the first primary floor by attaching a secondary floor of the second transformer assembly to the primary floor. Preferably this is performed by bolting the secondary floor of the secondary transformer assembly to the primary floor.

Preferred embodiments of the invention will now be described, by way of nonlimiting examples, with reference to the accompanying drawings in which:
Figures 1 and 2 show a substation platform according to an embodiment of the invention; and
Figure 3 shows the transfer of a transformer assembly between the substation platform and a barge.

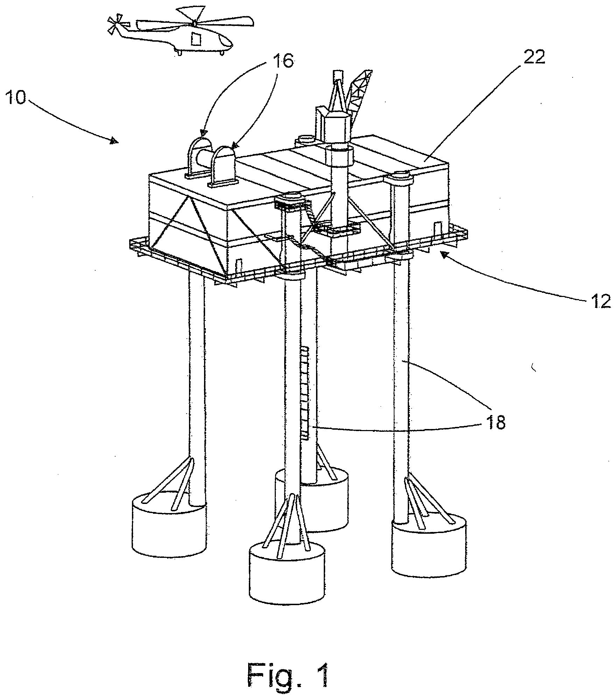

A substation platform for use in offshore power transmission according to an embodiment of the invention is shown in Figure 1.

The substation platform 10 comprises a primary floor 12, which is in the form of a floor of the substation platform 10. In other embodiments it is envisaged that the primary floor 12 may be in the form of a floor of a sub-frame attached to the substation platform 10.

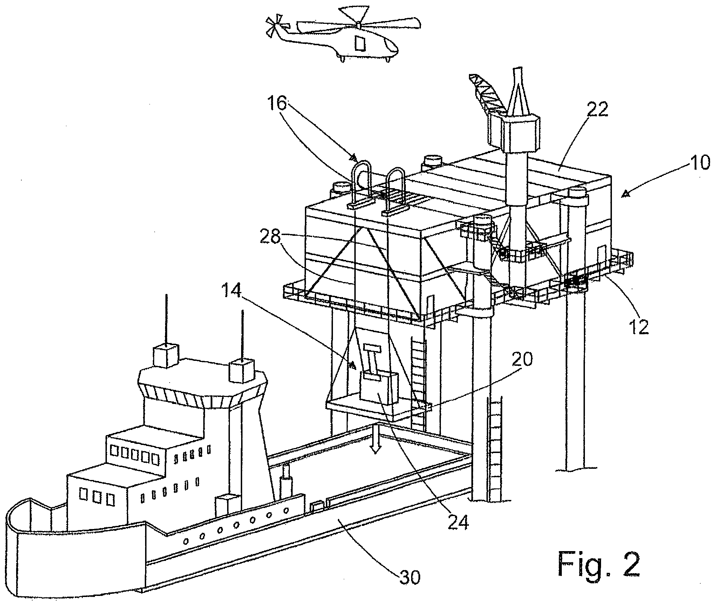

The substation platform 10 is supported by a plurality of jack up legs 18, as shown in Figures 1 and 2, the jack up legs being operable to raise the substation platform 10 such that the primary floor 12 is raised at a height above sea level to allow barges to pass through underneath the primary floor 12.

In Figure 2, the transformer assembly 14 includes a secondary floor 20 attached to the base of the transformer 24 and releasably connected to the primary floor 12 to ensure that the transformer assembly 14 retains its position during normal operation of the substation platform 10, regardless of weather conditions. For example, the secondary floor 20 may be fastened to the primary floor 12 using one or more bolted connections. The transformer assembly 14 may be located inside a topsides structure 22 to protect the transformer assembly 14 from adverse weather conditions.

The transformer assembly 14 includes a transformer 24 for connection in use to one or more electrical networks which are capable of stepping up or stepping down the voltage of electrical power transmitted between electrical networks via the transformer 24. The transformer 24 sits on the secondary floor 20 and may be either attached or unattached to the secondary floor 20. It is envisaged that in embodiments of the invention each transformer assembly 14 may include more than one transformer 24.

The primary floor 12 includes an opening which is formed underneath the transformer assembly 14 by detaching the secondary floor 20 of the transformer assembly 14 from the primary floor 12. Preferably the or each secondary floor 20 closes the respective opening in the primary floor 12 when the or each secondary floor 20 is connected to the primary floor 12. Closing the opening in the primary floor 12 with the secondary floor 20 of the transformer assembly 14 reduces the risk of people or equipment falling through the primary floor 12 into the sea. In addition, it is more straightforward to fasten the secondary floor 20 to the primary floor 12 when the footprint of the secondary floor 20 closely matches the footprint of the opening in the primary floor 12.

The primary floor 12 and/or the secondary floor 20 include a grill structure. The use of a grill structure reduces the weight of the or each floor, which renders the or each floor easier to transport. It also leads to a reduction in material, which leads to increased cost savings without affecting the mechanical strength of the or each floor 12,20.

The primary floor 12 and/or the secondary floor 20 may include a bunded tank to secure against transformer leaks and/or act as a catchment for fire suppression fluids.

The footprint of the secondary floor 20 may be different in size to that of the transformer 24. This allows the development of a modular arrangement in which a secondary floor 20 of standard size is used with an opening 26 of standard size while accommodating transformers 24 with different footprint sizes.

It is envisaged that in other embodiments a substation platform 10 may include a plurality of transformer assemblies 14, each being releasably connected to the primary floor 12 of the substation platform 10.

Each strand jack 16 includes a hydraulic cylinder, one or more cables 28 guided through the hydraulic cylinder, and first and second anchors.

Preferably the plurality of strand jacks 16 is located above the respective transformer assembly. For example, in Figures 1 and 2, the strand jacks 16 are mounted onto the roof of the topsides structure 22 so as to be located above the transformer assembly. The roof beams of the topsides structure 22 are designed to accommodate the weight of the transformer at the strand jack positions. The strand jacks 16 pass through a sealed penetration in a roof deck plate of the topsides structure 22 to permit attachment of each strand jack 16 to the transformer assembly.

It is envisaged that in other embodiments of the invention, the or each strand jack 16 may be temporarily positioned above the transformer assembly during replacement of the transformer and stored elsewhere on the substation platform during normal operation of the substation platform.

The transformer assembly 14 includes a spreader beam for connection in use to the or each cable 28 of the respective strand jack 16. The or each cable 28 is releasably connected to the spreader beam at a first end and anchored at a second end. The spreader beam is releasably connected to the secondary floor 20 using a plurality of chains or slings.

The first and second anchors are positioned at opposite ends of the hydraulic cylinder to allow the or each cable 28 to pass through the first and second anchors. These first and second anchors are operable to alternate between gripping and releasing the or each cable 28.

The purpose of the strand jacks 16 is to lower or lift the transformer assembly 14 through the opening 26 in the primary floor 12. Each strand jack 16 may be operated as follows:
The first anchor is controlled to grip a portion of the or each cable 28 and therefore supports the weight of the transformer assembly 14. The hydraulic cylinder applies a force onto the first anchor to drive the first anchor away from the hydraulic cylinder from a first position to a second position. This causes the gripped cable 28 to be guided through the hydraulic cylinder by the movement of the first anchor. When the first anchor reaches the second position, the second anchor is controlled to grip a portion of the or each cable 28 followed by the first anchor releasing its grip on the cable 28. The second anchor now supports the weight of the transformer assembly 14.

The first anchor is controlled to return to the first position and to grip a different portion of the cable 28 at the first position. This is followed by the second anchor releasing its grip on the cable 28 to allow the hydraulic cylinder to once more drive the first anchor from the first position to the second position.

The above operation is repeated to incrementally pull the cable 28 through the cylinder and therefore the load in the intended direction. The linear movement of the cable 28 together with the hydraulic strength of the strand jack 16 can be applied to the lifting or lowering of the respective transformer assembly 14.

The or each strand jack 16 is therefore operable to lower or lift the respective transformer assembly 14 through an opening 26 in the primary floor 12.

The required number of strand jacks 16 and cables 28 per strand jack 16 may vary depending on the weight of the transformer assembly 14. It is straightforward to install a large number of strand jacks 16 due to the small footprint of each strand jack 16.

It is envisaged that in other embodiments the strand jacks 16 may either be constantly connected to the transformer assembly 14 or only connected to the transformer assembly 14 when the transformer 24 needs replacing.

The replacement of a transformer 24 on a substation platform 10 is carried out as follows:
When a transformer 24 on a substation platform 10 is found to be defective, a transport barge 30 is requested. The transport barge 30 is positioned underneath the opening 26 of the primary floor 12 corresponding to the location of a first transformer assembly 14 including the defective transformer 24.

If the strand jacks 16 are not already connected to the first transformer assembly, it is necessary to first connect one or more cables 28 of at least one strand jack 16 to a first transformer assembly 14 before detaching the first transformer assembly 14 from the primary floor 12. In embodiments employing the use of a spreader beam, it may be necessary to connect the or each cable 28 to the spreader beam.

The first transformer assembly 14 is detached from the primary floor 12 by unbolting a secondary floor 20 of the first transformer assembly 14 from the primary floor 12. This is followed by the strand jacks 16 being operated to lower the first transformer assembly 14 through an opening in the primary floor 12 and the placement of the first transformer assembly 14 onto a barge 30, as shown in Figure 2.

Once the first transformer assembly is safely placed on the barge 30, the or each cable 28 of the respective strand jack 16 are detached from the first transformer assembly 14 to allow the barge 30 to transport the first transformer assembly 14 away from the substation platform 10 to another location.

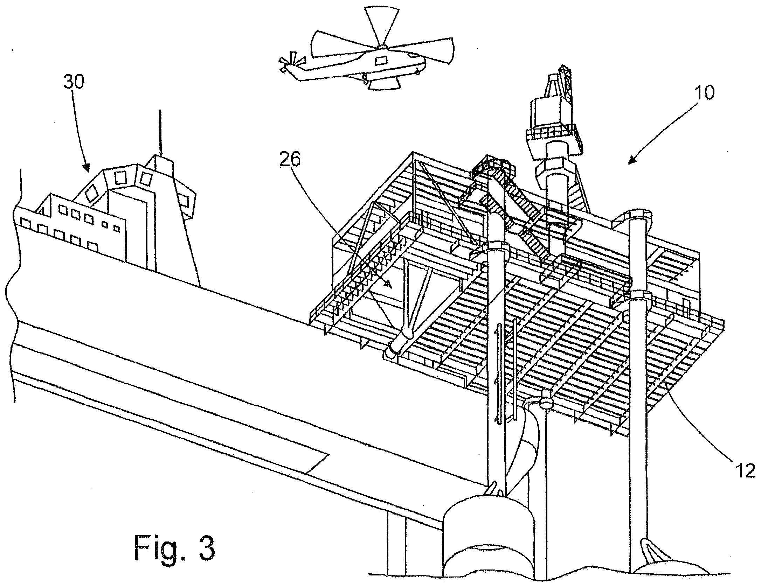

A barge 30 carrying a second transformer assembly is then positioned underneath the substation platform 10 so that the second transformer assembly is located underneath the opening 26 in the primary floor 12, as shown in Figure 3. The or each cable of at least one strand jack is releasably connected to the second transformer assembly so that the or each strand jack can be operated to lift the second transformer assembly through the opening 26 in the primary floor 12. Once the transformer is lifted to platform level, the secondary floor of the second transformer assembly is bolted to the primary floor 12.

After securing the second transformer assembly to the primary floor 12, the or each cable 28 of the respective strand jack 16 may be detached from the second transformer assembly.

Preferably the same barge 30 is used to transport both first and second transformer assemblies to minimise the number of trips and therefore reduce the offline period of the substation platform 10.

The method of replacing a transformer 24 on a substation platform 10 may also be used to replace a non-defective transformer with another transformer having different operating parameters.

## Claims

1. A substation platform (10) for use in offshore power transmission comprising a primary floor (12), at least one transformer assembly (14) including one or more transformers (24) for connection in use to one or more electrical networks, wherein the primary floor (12) includes at least one opening (26), wherein the or each transformer assembly (14) is releasably connected to the primary floor (12), and wherein the substation platform (10) includes at least one strand jack (16) including one or more cables (28), the or each cable (28) being operable to releasably connect to a respective transformer assembly (14) and the or each strand jack (16) being operable to lower or lift the respective transformer (24) through the respective opening (26) of the primary floor (12), **characterized in that** the or each transformer assembly (14) includes a secondary floor (20) attached to the base of the respective transformer (24) and releasably connected to the primary floor (12).

2. A substation platform according to Claim 1 wherein the or each opening (26) in the primary floor (12) is located underneath the respective transformer assembly (14).

3. A substation platform according to Claim 1 wherein the or each transformer assembly (14) closes the respective opening (26) of the primary floor (12) when the or each transformer assembly (14) is connected to the primary floor (12).

4. A substation platform according to any of the preceding claims wherein the or each strand jack (16) is located above the respective transformer assembly (14).

5. A substation platform according to any of the preceding claims wherein the or each secondary floor (20) closes the respective opening (26) in the primary floor (12) when the or each secondary floor (20) is connected to the primary floor (12).

6. A substation platform according to any of the preceding claims wherein the primary floor (12) and/or the or each secondary floor (20) includes a grill structure.

7. A substation platform according to any of the preceding claims wherein the or each secondary floor (20) is releasably connected to the primary floor (12) via one or more bolted connections.

8. A substation platform according to any of the preceding claims wherein the or each transformer assembly (14) includes a spreader beam for connection in use to the or each cable (28) of the respective strand jack (16).

9. A substation platform according to Claim 8, wherein the or each spreader beam is operable to releasably connect to the respective secondary floor (20) using a plurality of chains or slings.

10. A substation platform according to any preceding claim wherein at least one floor (12, 20) includes a bunded tank.

11. A method of replacing a transformer (24) on a substation platform (10) of any of the preceding claims comprising of the steps of
detaching a first transformer assembly (14) from the primary floor (12) by detaching a secondary floor (20) of the first transformer assembly (14) from the primary floor (12);
operating the or each strand jack (16) to lower the first transformer assembly (14) through the respective opening (26) in the primary floor (12);
placing the first transformer assembly (14) onto a boat (30); and
detaching the or each cable (28) of the respective strand jack (16) from the first transformer assembly (14).

12. A method according to Claim 11 further including the step of connecting one or more cables (28) of at least one strand jack (16) to the first transformer assembly (14) before detaching the first transformer assembly (14) from the primary floor (12).

13. A method according to Claim 11 or Claim 12 further including the steps of:
positioning a boat (30) carrying a second transformer assembly so that the second transformer assembly is located underneath the opening (26) in the primary floor (12);
connecting one or more cables (28) of at least one strand jack (16) to the second transformer assembly;
operating the or each strand jack (16) to lift the second transformer assembly through the opening (26) in the primary floor (12); and
attaching the second transformer assembly to the primary floor (12).

14. A method according to Claim 13 further including the step of detaching the or each cable (28) of the respective strand jack (16) from the second transformer assembly after attaching the second transformer assembly to the primary floor (12).

15. A method according to any of Claims 11 to 14 when dependent from Claim 7 wherein the secondary floor (20) of the first transformer assembly (14) is detached from the primary floor (12) by releasing the one or more bolted connections.

16. A method according to any of Claims 11 to 15 wherein the second transformer assembly is attached to the primary floor (12) by attaching a secondary floor of the second transformer assembly to the primary floor (12).

17. A method according to Claim 16 when dependent from Claim 7 wherein the secondary floor of the second transformer assembly is bolted to the primary floor (12).

## Patentansprüche

1. Unterstation-Plattform (10) zur Verwendung bei einer Offshore-Kraftübertragung, umfassend ein primäres Deck (12), wenigstens eine Transformator-Anordnung (14), die einen oder mehrere Transformatoren (24) aufweist, welche bei Gebrauch mit einem oder mehreren elektrischen Netzen verbunden werden, wobei das primäre Deck (12) wenigstens eine Öffnung (26) aufweist und die oder jede Transformator-Anordnung (14) lösbar mit dem primären Deck (12) verbunden ist, und wobei die Unterstation-Plattform (10) wenigstens eine Strangwinde (16) aufweist, die mit einem oder mehreren Kabeln (28) versehen ist, daß das oder jedes Kabel (28) betätigbar ist, um mit einer entsprechenden Transformator-Anordnung (14) lösbar verbunden zu werden und die oder jede Strangwinde (16) betätigbar ist, um den entsprechenden Transformator (24) durch die entsprechende Öffnung (26) des primären Decks (12) zu senken oder zu heben, **dadurch gekennzeichnet, daß** die oder jede Transformator-Anordnung (14) ein sekundäres Deck (20) aufweist, das an der Basis des entsprechenden Transformators (24) angebracht und lösbar mit dem primären Deck (12) verbunden ist.

2. Unterstation-Plattform nach Anspruch 1, **dadurch gekennzeichnet, daß** jede Öffnung (26) in dem primären Deck (12) unterhalb der entsprechenden Transformator-Anordnung (14) liegt.

3. Unterstation-Plattform nach Anspruch 1, **dadurch gekennzeichnet, daß** die oder jede Transformator-Anordnung (14) die entsprechende Öffnung (26) des primären Decks (12) schließt, sobald die oder jede Transformator-Anordnung (14) mit dem primären Deck (12) verbunden ist.

4. Unterstation-Plattform nach einem der vorhergehenden Ansprüche, **dadurch gekennzeichnet, daß** die oder jede Strangwinde (16) über der entsprechenden Transformator-Anordnung (14) liegt.

5. Unterstation-Plattform nach einem der vorhergehenden Ansprüche, **dadurch gekennzeichnet, daß** das oder jedes sekundäre Deck (20) die entsprechende Öffnung (26) in dem primären Deck (12) schließt, sobald das oder jedes sekundäre Deck (20) mit dem primären Deck (12) verbunden ist.

6. Unterstation-Plattform nach einem der vorhergehenden Ansprüche, **dadurch gekennzeichnet, daß** das primäre Deck (12) und / oder das oder jedes sekundäre Deck (20) eine Gitterstruktur aufweist.

7. Unterstation-Plattform nach irgendeinem der vorhergehenden Ansprüche, **dadurch gekennzeichnet, daß** das oder jedes sekundäre Deck (20) mit dem primären Deck (12) über eine oder mehrere Schraubverbindungen lösbar verbunden ist.

8. Unterstation-Plattform nach einem der vorhergehenden Ansprüche, **dadurch gekennzeichnet, daß** die oder jede Transformator-Anordnung (14) eine Spreizstange aufweist, die bei Benutzung zur Verwendung mit dem oder jedem Kabel (28) der entsprechenden Strangwinde (16) dient.

9. Unterstation-Plattform nach Anspruch 8, **dadurch gekennzeichnet, daß** die oder jede Spreizstange so betätigbar ist, daß sie lösbar mit dem entsprechenden sekundären Deck unter Verwendung mehrerer Ketten oder Schlingen verbunden ist.

10. Unterstation-Plattform nach einem der vorhergehenden Ansprüche, **dadurch gekennzeichnet, daß** wenigstens ein Deck (12, 20) einen eingebauten Tank aufweist.

11. Verfahren zum Ersetzen eines Transformators (24) auf einer Unterstation-Plattform (10), gemäß einem der vorhergehenden Ansprüche, umfassend die folgenden Schritte: Abbau einer ersten Transformator-Anordnung (14) von dem primären Deck (12) durch Abbauen eines sekundären Decks (20) der ersten Transformator-Anordnung (14) von dem primären Deck (12); Betätigen der oder jeder Strangwinde (16), um die erste Transformator-Anordnung (14) durch die entsprechende Öffnung (26) in dem primären Deck (12) zu senken; Plazieren der ersten Transformator-Anordnung (14) auf einem Boot (30) und Abbauen des oder jedes Kabels (28) der entsprechenden Strangwinde (16) von der ersten Transformator-Anordnung (14).

12. Verfahren nach Anspruch 11, ferner **gekennzeichnet durch** den Schritt der Verbindung eines oder mehrer Kabel (28) an wenigstens einer Strangwinde (16) mit der ersten Transformator-Anordnung (14) vor dem Abbau der ersten Transformator-Anordnung (14) von dem primären Deck (12).

13. Verfahren nach Anspruch 11 oder 12, ferner **gekennzeichnet durch** die Schritte des Positionierens eines Bootes (30), das eine zweite Transformator-Anordnung trägt, so daß die zweite Transformator-Anordnung unterhalb der Öffnung (26) in dem primären Deck (12) liegt; Anschließen eines oder mehrerer Kabel (28) der wenigstens einen Strangwinde (16) an die zweite Transformator-Anordnung; Betätigen der oder jeder Strangwinde (16) zum Heben der zweiten Transformator-Anordnung **durch** die Öffnung (26) in dem primären Deck (12); und Anbringen der zweiten Transformator-Anordnung an dem primären Deck (12).

14. Verfahren nach Anspruch 13, ferner **gekennzeichnet durch** den Schritt des Entfernens des oder jedes Kabels (28) der entsprechenden Strangwinde (16) von der zweiten Transformator-Anordnung nach Anbringen der zweiten Transformator-Anordnung an dem primären Deck (12).

15. Verfahren nach einem der Ansprüche 11 bis 14, in Abhängigkeit vom Anspruch 7, **dadurch gekennzeichnet, daß** das zweite Deck (20) der ersten Transformator-Anordnung (14) von dem primären Deck (12) durch Lösen der einen oder mehreren Schraubverbindungen abgebaut wird.

16. Verfahren nach einem der Ansprüche 11 bis 15, **dadurch gekennzeichnet, daß** die zweite Transformator-Anordnung an dem primären Deck (12) durch Anbringen eines zweiten Decks der zweiten Transformator-Anordnung an dem primären Deck (12) angebracht wird.

17. Verfahren nach Anspruch 16, in Abhängigkeit vom Anspruch 7, **dadurch gekennzeichnet, daß** das sekundäre Deck der zweiten Transformator-Anordnung mit dem primären Deck (12) verschraubt wird.

## Revendications

1. Plateforme de sous-station (10) destinée à être utilisée pour la transmission d'énergie en mer comprenant un plancher principal (12), au moins un ensemble de transformateur (14) comprenant un ou plusieurs transformateurs (24) pour se raccorder, à l'usage, à un ou plusieurs réseaux électriques, dans laquelle le plancher principal (12) comprend au moins une ouverture (26), dans laquelle le ou chaque ensemble de transformateur (14) est raccordé, de manière amovible, au plancher principal (12), et dans laquelle la plateforme de sous-station (10) comprend au moins un vérin à toron (16) comprenant un ou plusieurs câbles (28), le ou chaque câble (28) pouvant se raccorder de manière amovible à un ensemble de transformateur (14) respectif et le ou chaque vérin à toron (16) pouvant fonctionner pour abaisser ou lever le transformateur (24) respectif à travers l'ouverture (26) respective du plancher principal (12), **caractérisée en ce que** le ou chaque ensemble de transformateur (14) comprend un plancher secondaire (20) fixé à la base du transformateur (24) respectif et raccordé de manière amovible au plancher principal (12).

2. Plateforme de sous-station selon la revendication 1, dans laquelle la ou chaque ouverture (26) dans le plancher principal (12) est positionnée au-dessous de l'ensemble de transformateur (14) respectif.

3. Plateforme de sous-station selon la revendication 1, dans laquelle le ou chaque ensemble de transformateur (14) ferme l'ouverture (26) respective (26) du plancher principal (12) lorsque le ou chaque ensemble de transformateur (14) est raccordé au plancher principal (12).

4. Plateforme de sous-station selon l'une quelconque des revendications précédentes, dans laquelle le ou chaque vérin à toron (16) est positionné au-dessus de l'ensemble de transformateur (14) respectif.

5. Plateforme de sous-station selon l'une quelconque des revendications précédentes, dans laquelle le ou chaque plancher secondaire (20) ferme l'ouverture (26) respective dans le plancher principal (12) lorsque le ou chaque plancher secondaire (20) est raccordé au plancher principal (12).

6. Plateforme de sous-station selon l'une quelconque des revendications précédentes, dans laquelle le plancher principal (12) et/ou le ou chaque plancher secondaire (20) comprend une structure de grille.

7. Plateforme de sous-station selon l'une quelconque des revendications précédentes, dans laquelle le ou chaque plancher secondaire (20) est raccordé de manière amovible au plancher principal (12) via un ou plusieurs raccordements boulonnés.

8. Plateforme de sous-station selon l'une quelconque des revendications précédentes, dans laquelle le ou chaque ensemble de transformateur (14) comprend un palonnier pour le raccordement, à l'usage, au ou à chaque câble (28) du vérin à toron (16) respectif.

9. Plateforme de sous-station selon la revendication 8, dans laquelle le ou chaque palonnier peut fonctionner pour se raccorder de manière amovible au plancher secondaire (20) respectif en utilisant une pluralité de chaînes ou d'élingues.

10. Plateforme de sous-station selon l'une quelconque des revendications précédentes, dans laquelle au moins un plancher (12, 20) comprend un réservoir protégé.

11. Procédé pour remplacer un transformateur (24) sur une plateforme de sous-station (10) selon l'une quelconque des revendications précédentes, comprenant les étapes consistant à :
détacher un premier ensemble de transformateur (14) du plancher principal (12) en détachant un plancher secondaire (20) du premier ensemble de transformateur (14) du plancher principal (12) ;
actionner le ou chaque vérin à toron (16) pour abaisser le premier ensemble de transformateur (14) à travers l'ouverture (26) respective dans le plancher principal (12) ;
placer le premier ensemble de transformateur (14) sur un bateau (30) ; et
détacher le ou chaque câble (28) du vérin à toron (6) du premier ensemble de transformateur (14).

12. Procédé selon la revendication 11, comprenant en outre l'étape consistant à raccorder un ou plusieurs câbles (28) d'au moins un vérin à toron (16) au premier ensemble de transformateur (14) avant de détacher le premier ensemble de transformateur (14) du plancher principal (12).

13. Procédé selon la revendication 11 ou la revendication 12, comprenant en outre les étapes consistant à :
positionner un bateau (30) portant un second ensemble de transformateur de sorte que le second ensemble de transformateur est positionné au-dessous de l'ouverture (26) dans le plancher principal (12) ;
raccorder un ou plusieurs câbles (28) d'au moins un vérin à toron (16) au second ensemble de transformateur ;
actionner le ou chaque vérin à toron (16) pour lever le second ensemble de transformateur à travers l'ouverture (26) dans le plancher principal (12) ; et
fixer le second ensemble de transformateur au plancher principal (12).

14. Procédé selon la revendication 13, comprenant en outre l'étape consistant à détacher le ou chaque câble (28) du vérin à toron (16) respectif du second ensemble de transformateur après avoir détaché le second ensemble de transformateur au plancher principal (12).

15. Procédé selon l'une quelconque des revendications 11 à 14 lorsqu'elle dépend de la revendication 7, dans lequel le plancher secondaire (20) du premier ensemble de transformateur (14) est détaché du plancher principal (12) en libérant les un ou plusieurs raccordements boulonnés.

16. Procédé selon l'une quelconque des revendications 11 à 15, dans lequel le second ensemble de transformateur est fixé sur le plancher principal (12) en fixant un plancher secondaire du second ensemble de transformateur sur le plancher principal (12).

17. Procédé selon la revendication 16 lorsqu'elle dépend de la revendication 7, dans lequel le plancher secondaire du second ensemble de transformateur est boulonné sur le plancher principal (12).
